# EUROPÄISCHE PATENTSCHRIFT

(11) **EP 2 129 507 B1**
(45) Veröffentlichungstag und Bekanntmachung des Hinweises auf die Patenterteilung: **18.05.2016**
(21) Anmeldenummer: 08708372.1
(22) Anmeldetag: 29.01.2008
(51) Int. Cl.: B29C 47/06, B29C 47/86, B29C 47/92, B29C 47/26

(54) **BLASKOPF UND VERFAHREN FÜR DIE HERSTELLUNG EINER MEHRSCHICHTIGEN BLASFOLIE**
BLOWHEAD AND METHOD FOR THE PRODUCTION OF A MULTILAYER BLOWN FILM
TÊTE DE SOUFFLAGE ET PROCÉDÉ POUR LA FABRICATION D'UNE FEUILLE SOUFFLÉE MULTICOUCHE

(30) Priorität: 23.02.2007 DE 102007008844
(43) Veröffentlichungstag der Anmeldung: 09.12.2009
(73) Patentinhaber: Windmöller & Hölscher KG, 49525 Lengerich (DE)
(72) Erfinder: AVERMEYER, Ansgar, 49124 Georgsmarienhütte (DE); BACKMANN, Martin, 49525 Lengerich (DE); SENSEN, Klemens, 49525 Lengerich (DE)
(86) Internationale Anmeldenummer: PCT/EP2008/051055
(87) Internationale Veröffentlichungsnummer: WO 2008/101768

(56) Entgegenhaltungen:
- EP-A- 0 435 786
- DE-A1-102004 001 473

## Beschreibung

Die Erfindung betrifft einen Blaskopf und ein Verfahren zur Herstellung einer mehrschichtigen Blasfolie gemäß dem Oberbegriff des Anspruchs 1 und des Anspruchs 13. Blasköpfe sind bekannt. Mit ihnen werden in Blasfolienextrusionsanlagen Blasfolien extrudiert.

Hierzu verwandelt ein oder mehrere Extruder ein Kunststoffextrudat in eine Kunststoffschmelze, die dem Blaskopf zugeleitet wird. Hierzu dienen Schmelzeleitungen, die den oder die Extruder mit dem Blaskopf verbinden. In der Regel setzen sich die betreffenden Schmelzeleitungen in dem Blaskopf fort. Hier münden sie jedoch in Spalten innerhalb des Blaskopfes. Bei Blasköpfen zur Herstellung mehrschichtiger Folie sind in einem Blaskopf jeweils mehrere solcher Spalten zur Leitung einer Einzelströmung vorgesehen. In diesen Spalten werden die Einzelschichten im eigentlichen Sinne gebildet. Hierzu wird die Einzelschicht beziehungsweise die Einzelströmung von der zylindrischen Form in der Zuführleitung in eine in der Aufwicklung flache Form überführt. Bei hochwertigen Blasköpfen kann die Überführung vorgenommen werden, indem die Schmelzeleitung in Umfangsrichtung (ϕ) des Blaskopfes beziehungsweise des Folienschlauches geführt wird und dabei in den flachen Einzelspalt übergeht. Hierbei kann die Zuführleitung als Wendel oder als Pinole in den Spalt übergehen. Die Zone, in der dieser Übergang stattfindet, wird in dieser Druckschrift Schmelzeverteilzone genannt.
Oft, aber nicht immer, schließt sich dieser Zone eine Fließzone an, in der die Schmelze entlang des Spaltes zur Leitung einer Einzelströmung entlang fließt und sich hierbei noch stärker an die neue flache Form "gewöhnt". Es sind auch Blasköpfe bekannt, bei der eine Zuführleitung ohne extra ausgeprägte Schmelzeverteilzone direkt in eine Fließzone übergeht.
Schließlich münden bei Blasköpfen zur Herstellung von mehrschichtigen Folien die Spalten zur Leitung einer Einzelströmung in einen Spalt zur Zusammenführung des Folienverbundes, der schließlich als Ringspalt ausgeführt ist. In diesem Ringspalt haften die verschiedenen Folienschichten aneinander. Der Ringspalt endet an der runden Extrusionsdüse, an der der Schmelzeschlauch den Blaskopf verlässt.

Es ist aus der DE 10 2004 001 473 A1 bekannt, bei solchen Blasköpfen die Dicke der gesamten Folie zu messen und zu regeln. Zu diesem Zweck sind in der Nähe des Ringspaltes elektrisch betreibbare Heizpatronen angeordnet. Diese stehen in thermischem Kontakt zu der Schmelze und sind in der Lage, Sektoren der Umfangsfläche des Schmelzeschlauches selektiv Wärme zuzuführen.
Sie werden aktiviert, wenn eine Messvorriphtung, die die Foliendicke am Umfang des extrudierten Folienschlauches misst, eine Dickstelle in einem solchen Sektor der Umfangsfläche feststellt. Das Heizen der Schmelze des entsprechenden Sektors erhöht die Reckfähigkeit desselben, so dass der entsprechende Sektor durch den innendruck in der Folienblase stärker ausgereckt wird als die unbehandelten Sektoren. Das stärkere Ausrecken beseitigt die Dickstelle.

Aus der EP 0 435 786 A2 ist es bekannt, die Temperatur einzelner Schmelzeschichten insgesamt durch eine massive Kühlung zu beeinflussen. Auf diese Weise soll es gelingen, Einzelschichten mit stark unterschiedlicher Verarbeitungstemperatur relativ schadensfrei zur mehrschichtiger Folie zu verbinden, indem die heißer verarbeitete Schmelzeschicht gekühlt wird, bevor sie an die wärmeempfindlichere Folie herangeführt wird.

Mehrschichtige Folien besitzen unterschiedliche Folienschichten aus zum Teil hochwertigem Folienmaterial.

Daher besteht die Aufgabe der vorliegenden Erfindung darin, einen Blaskopf und ein Verfahren vorzuschlagen, mit dem sich die Dicke von Einzelschichten innerhalb des Folienverbundes gezielt beeinflussen lässt.
Die Aufgabe wird dadurch gelöst, dass an wenigstens einem Fließweg einer Einzelströmung vor dem Erreichen des Ringspaltes zumindest ein Thermoelemente angeordnet ist, wie in den Ansprüchen 1,13 angegeben .
Diese Formulierung bedeutet, dass in unmittelbarer räumlicher Nähe (im Bereich kleiner wenige Zentimeter vom Schmelzestrom der Einzelströmung entfernt einer Einzelströmung zumindest ein Thermoelement, das heißt ein Bauteil, mit dem auf die Temperatur der Umgebung Einfluss genommen werden kann, angeordnet. ist. Natürlich steht das Thermoelement in einer (thermischen) Wirkverbindung mit dem Einzelschmelzestrom. In der Regel wird diese thermische Wirkverbindung zumindest zum Teil durch das Bauteil, das den Einzelschmelzestrom begrenzt, bereitgestellt. Das heißt, es ist vorteilhaft, das Thermoelement in die Platte oder das Umlenkstück, das beispielsweise den Spalt zur Leitung einer Einzelströmung auf einer Seite begrenzt, einzubringen. Ein Thermoelement kann aber auch an einem solchen Bauteil mit Kontakt zur Schmelze angebracht sein.

Hierbei steht das Thermoelement vor allem in Wirkverbindung mit der Einzelschmelzeströmung, auf die es vorzugsweise in der Zuführleitung zu den Einzelspalten oder in den Einzelspalten selber einwirkt.
Das zumindest eine Thermoelement wird also in der Strömungsrichtung der Schmelze auf der Höhe der Zuführleitung oder des Einzelspaltes liegen. Hierbei bedeutet "in der Strömungsrichtung auf der Höhe", dass das Thermoelement in bevorzugter Wirkverbindung mit dem jeweiligen Abschnitt des Schmelzeströmungsweges steht (bevorzugte Wirkverbindung = besserer Wärmeübergang zu diesem Teil des Schmelzeweges dieser jeweiligen Einzelströmung als zu einem anderen Teil oder einer anderen Einzelströmung). Diese Feststellung ist wichtig, da es verschiedene Typen von Blasköpfen gibt und da bei einem Teil dieser Typen sich die Richtung, in der die Schmelze fließt, wiederholt ändert. Auf diese Umstände wird später noch anhand der Figuren näher eingegangen.
Im Vergleich zur Beeinflussung der Dicke eines gesamten Folienverbundes oder einer Einzelschichtfolie treten hierbei einige überraschende Unterschiede zu Tage:
Bei der Gesamtfoliendicke wird als physikalische Größe die Reckfähigkeit der Folie durch Temperatureintrag beeinflusst. Ein Erwärmen beseitigt eine Dickstelle auf dem Folienumfang, wirkt also der Foliendicke entgegen.
Bei einem Verfahren nach der Erfindung wird die Viskosität der Schmelze in dem Blaskopf verändert. Ein Wärmeeintrag steigert die Viskosität (bevorzugt in Bezug auf eine ausgewählte Stelle am Folienumfang), was dazu führt, dass bei gleichem Druck mehr Schmelzevolumen pro Zeiteinheit fließt. Die auf diese Weise gesteigerte Fließgeschwindigkeit führt zu einer größeren Dicke der Folienschicht (bevorzugt einer ausgewählten Stelle am Folienumfang).

Die Temperatur der Schmelze wird an einem Einzelstromabschnitt mit zumindest einem Thermoelement beeinflusst. Dazu steht das Thermoelement in Wirkverbindung mit einem Abschnitt bzw. Sektor eines Schmelzstromweges. So können einzelne Dickstellen bzw. Dünnstellen (sektorweise) auf dem Folienumfang beseitigt werden. Ein Wärmeeintrag eines Schmelzestromabschnitts (durch ein Thermoelement) steigert die Viskosität desselben, so dass bei gleichem Druck mehr Schmelzevolumen pro Zeiteinheit aus dem Ringspalt austritt und eine größere Foliendicke an einem bestimmten Umfangsabschnitt hervorgerufen wird. Bei umgekehrter Vorgehensweise sind die umgekehrten Effekte zu beobachten.
Nach einer geeigneten Messung der Dicke einer Einzelschicht kann so die Regelung ihrer Dicke - vorzugsweise mit dem Ziel einer gleichmäßigen Dicke der Einzelschicht - vorgenommen werden.
Die durch die beiden Verfahren beeinflussten physikalischen Größen sind daher unterschiedlich, und Auswirkungen eines Temperatureintrags sind diametral verschieden.
Wie bereits erwähnt, weisen die Einzelspalte hochwertiger Blasköpfe oft eine Schmelzeverteilzone und eine Fließzone auf. In der Schmelzeverteilzone geht die Schmelzezuführleitung in den Einzelspalt über, wobei die Schmelzeströmung von der oft zylinderartigen Form der Schmelzezuführleitung in eine flache Form, die weitgehend der späteren Folienschicht entspricht, überführt wird.

In dem Übergangsbereich nimmt die Zuführleitung oft eine Wendel- oder Pinolenform an. Die Wendel oder Pinole ist zumindest in Richtung des Schmelzestromes zu dem Spalt hin geöffnet. In der Regel verläuft die Wendel oder Pinole hierbei in Umfangsrichtung des Blaskopfes. Insbesondere die Wendeln haben hierbei eine korkenzieherartige Form. Wendeln und Pinolen verjüngen sich in Richtung des Schmelzetransports, während der Einzelspalt breiter wird. Schließlich endet die Wendel oder Pinole und mit ihr die Schmelzeverteilzone des Einzelspalts.

In der Regel schließt sich an die Schmelzeverteilzone eine Fließzone an, in der die Schmelze unter Beibehaltung ihrer neuen Form durch den Spalt fließt und sich so quasi an ihre Form "gewöhnt". Schließlich mündet der Spalt zur Leitung einer Einzelströmung in einen gemeinsamen Spalt, in dem alle Schmelzeströmungen vereint werden, ein.
Für viele Anwendungsfälle hat es sich als vorteilhaft erwiesen, wenn zumindest ein Thermoelement in der Schmelzetransportrichtung sehr nahe vor der Einmündung der Schmelze in den gemeinsamen Spalt angeordnet ist. Hier kommen Abstände von 3 bis 25 Zentimeter, besser von 5 bis 18 Zentimeter als vorteilhafte Bereiche in Betracht.
Allgemein im Einzelspalt, aber insbesondere im Fließbereich ist es von Vorteil, wenn das zumindest eine Thermoelement "schräg" zu dem Verlauf des Einzelspalts ausgerichtet ist. "Schräg" heißt in diesem Zusammenhang das Folgende:
Der kürzeste Weg zwischen einem Übergangspunkt der Schmelze in einen Einzelspalt und der Einmündung des Einzelspaltes in den Ringspalt zur Zusammenführung des Folienverbundes ist eine Gerade (geometrisch wohl eher eine Strecke), die bei Einzelspalten, die eine kegelstumpfartige oder kreiszylindrische Form haben, parallel zur Symmetrieachse des Kreiszylinders oder Kegelstumpfes verläuft. Hat ein solcher Einzelspalt die Form einer Kreisscheibe wie zum Beispiel bei einem nach dem so genannten Stack-Die-Prinzip aufgebauten Blaskopf, dann läuft diese Strecke von dem Übergangspunkt der Schmelze auf das Zentrum der Kreisscheibe zu. Eine Ausrichtung der Thermoelemente (bzw. ihrer Längsachsen) parallel zu diesen Strecken ist vorteilhaft. Es ist jedoch noch vorteilhafter, zwischen diesen Strecken und den Thermoelementen einen Winkel χ größer 0° vorzusehen. Bevorzugte Winkel zwischen der Längsachse der Thermoelemente 85 und der Wendel 15 liegen zwischen 0° und dem Betrag des Winkels zwischen Pinolen oder Wendeln und den Strecken 100.

Durch diese Maßnahme können die in der Regel zylindrisch ausgeprägten und entlang der Zylinderachse lang gestreckten Thermoelemente auf die Kunststoffschmelze entlang ihrer tatsächlichen Strömungsrichtung einwirken: Solange die Kunststoffschmelze einer Einzelströmung (beziehungsweise einer Einzelschicht) überwiegend in einer Schmelzezuführleitung beziehungsweise in einer Pinole oder Wendel geführt wird, ist es zumeist vorteilhaft, zumindest ein Thermoelement parallel zum Verlauf dieses Schmelzewegsegments anzuordnen. Spätestens am Ende der Schmelzeverteilzone ändert sich jedoch die Fließrichtung der Schmelze: Innerhalb von Wendel und Pinolen gab es bestimmende Komponenten der Schmelzebewegung in Umfangsrichtung des Blaskopfes. Beim Verlassen der Pinole oder Wendel beginnt die Schmelze jedoch, sich zunehmend stärker entlang der Strecke, die den kürzesten Weg zwischen dem Ort des Übergangs des betreffenden Schmelzesegments und dem Einzelspalt und der Mündung des Einzelspalts in den Ringspalt zur Führung des Folienverbundes markiert (siehe oben), zu bewegen. Einer in der Regel ungewollten Durchmischung verschiedener Schmelzeschichten in dem Spalt oder Ringspalt, in dem diese Schichten zusammengeführt werden, wird vorgebeugt, wenn sich die Bewegungskomponenten in Umfangsrichtung des Blaskopfes bis zur Einmündung des Spaltes zur Leitung einer Einzelströmung in den Spalt oder Ringspalt weitgehend abgebaut haben.
Entspricht die Ausrichtung des zumindest einen Thermoelements der tatsächlichen Schmelzebewegung auf dieser Höhe in Strömungsrichtung der Schmelze, so wird durch die Einflussnahme des Thermoelements ein Flächensegment des späteren Folienschlauchs beeinflusst, das in einem beschränkten und räumlich klar umrissenen Winkelbereich des Folienschlauchs (gemeint sind in dem Zylinderkoordinatensystem des Folienschlauchs die Winkelkoordinaten ϕ in Umfangsrichtung des Folienschlauches) liegt. Dadurch kann auf Dick- oder Dünnstellen der Folienblase sektorweise in Umfangsrichtung Einfluss genommen werden.

Wie bereits erwähnt besteht eine vorteilhafte Möglichkeit, die Thermoelemente zu positionieren darin, sie in den Bauteilen des Blaskopfes, welche die Einzelströmung führen, zu positionieren. Bevor die Einzelströmungen (das heißt die Schmelzeströmungen, die jeweils eine Einzelschicht in der Folie bilden) die jeweilige Einmündung in den gemeinsamen Ringspalt erreichen, durchlaufen sie vor allem die Zuführleitungen für die Einzelspalten und die Einzelspalten selber. Die Bauteile, die die Einzelspalten begrenzen, werden für die Zwecke dieser Druckschrift vor allem Verteilwerkzeug genannt. Bei Stack-Die-Blasköpfen werden die die Einzelspalten begrenzenden Bauteile oft Platten genannt, bei Blasköpfen mit zentralem Vorverteiler oft Umlenkstücke. Der Begriff Verteilwerkzeug ist also zumindest für "Platten" und "Umlenkstücke" der Oberbegriffs.
Diese Verteilwerkzeuge begrenzen oft zwei unterschiedliche, bevorzugt benachbarte Spalten zur Leitung einer Einzelströmung. In diesem Fall ist es zweckmäßig, die thermische Anbindung des Thermoelements so zu gestalten, dass der Wärmeübergang zu der einen Einzelströmung (möglichst) deutlich besser ist als zu der anderen. Auf diese Weise wird die selektive und exklusive Einflussnahmemöglichkeit auf eine Schmelzeschicht gestärkt.
Dieser unterschiedliche Wärmeübergang kann durch eine asymmetrische Positionierung des Thermoelementes im oder am Verteilwerkzeug vorgenommen werden. Auch der Einsatz von Material (stark) unterschiedlicher thermischer Leitfähigkeit bietet hier Möglichkeiten, unterschiedlich starke Wärmeübergänge herbeizuführen.
Neben einem zusätzlichen Erwärmen bietet sich auch ein Abkühlen von Schmelze bei der Durchführung des Verfahrens an. Angesichts der hohen Beträge an Wärmeenergie, die in kurzer Zeit zu- oder abzuführen sind, um die Viskosität der Schmelze gezielt zu verändern, ist die Auswahl geeigneter Thermoelemente nicht einfach.
Unter anderem kommen Heizpatronen und Pelletierelemente in Frage. Diese können bereits das Thermoelement bilden. Es ist jedoch vorteilhaft, ein Thermoelement aus einem bevorzugt länglich (zylindrisch ist sehr gut) geformten Grundkörper aufzubauen. Dieser kann aus einem Material gefertigt sein, das eine geringere Wärmeleitfähigkeit aufweist als das Verteilwerkzeug. Innerhalb dieses Grundkörpers kann eine aktive (z. B. Pelletierelement oder Heizpatrone, "Wirkelement") oder eine passive (z. B. Temperiermittelleitung) Wärmequelle oder -senke angeordnet sein. Um den Wärmeübergang zu benachbarten Einzelströmungen unterschiedlich zu gestalten, ist eine asymmetrische Anordnung der Wärmequellen und -senken in einem solchen Grundkörper von Vorteil.

Wie bereits erwähnt ist es zu einer gezielten Regelung lokaler über dem Folienumfang in ϕ-Richtung verteilter Schichtdicken notwenig, nur Teilbereiche (Abschnitte) einer Schmelzeschicht zu beeinflussen und dabei die weiteren Schichten weitgehend unbeeinflusst zu lassen. Hierzu ist vorgesehen, die Thermoelemente möglichst nah an der zu beeinflussenden Schicht zu platzieren, also beispielsweise dicht unterhalb einer Mantelfläche am Verteilerelement, und dann zur anderen Seite hin eine Wärme isolierende Schicht vorzusehen, die den Einfluss des Thermoelements auf die Nachbarschicht zumindest begrenzt.
Dabei ist es auch sinnvoll, die Thermoelemente für die innerste Schmelzeschicht an dem zentralen Basisteil anzuordnen, an dem keine weiteren Schichten mehr beeinflusst werden.
Für die ganz außen liegende Folienschicht wiederum ist es günstig, die Thermoelemente an der inneren Mantelfläche des äußersten Verteilwerkzeuges anzuordnen, da nach außen hin wiederum keine zu beeinflussenden Fließwege mehr bestehen. Eine sorgfältige thermische Trennung muss damit nur noch bei den mittleren Verteilerelementen vorgenommen werden.

Vorzugsweise sind die Thermoelemente jeweils als rohrförmige oder zylindrische Heizpatrone ausgebildet, die handelsüblich ist und durch ihre zylindrische Hüllform den weiteren Vorteil besitzt, dass sie einfach in Bohrungen eingesetzt werden kann. Damit ist auch der Einsatz relativ langer Heizpatronen möglich, die eine Beeinflussung der Viskosität über einen größeren Fließweg erlauben.

Vorteilhafterweise werden die zylindrischen Heizpatronen nicht direkt in Aufnahmebohrungen am Verteilerwerkzeug eingesetzt, sondern in zylindrische Trägerbuchsen, in denen dann die Heizpatrone exzentrisch anzuordnen ist. Durch die Exzentrizität kann der Abstand des Thermoelementes zur Mantelfläche variiert werden. Zugleich wirkt das freie Volumen der Trägerbuchse wärmeisolierend.

Das Heizelement kann mechanisch in der Trägerbuchse befestigt sein, so dass ein gasgefüllter Leerraum verbleibt. Der Leerraum kann auch mit einem wärmeisolierenden Werkstoff, beispielsweise einem Isolierschaum, ausgefüllt werden.

Um zwar den Wärmeeintrag am Umfang durch möglichst viele Thermoelemente gleichmäßig zu verteilen, andererseits aber den Aufwand für die Ansteuerung der Heizelemente in Grenzen halten zu können, können mehrere Thermoelemente zu Gruppen zusammengefasst werden, welche dann selektiv angesteuert werden. Um einen Temperaturgradienten einzustellen kann es aber auch vorteilhaft sein, alle Thermoelemente gleichzeitig, aber mit unterschiedlicher Leistung, anzusteuern.

Dabei ist es vorteilhaft eine Steuervorrichtung vorzusehen, die die einzelnen Thermoelemente unabhängig voneinander ansteuern kann, Außerdem ist es vorteilhaft, wenn dieses Steuergerät Informationen über die in Umfangsrichtung vorhandene "Dickeverteilung" der Blasfolie enthält. Diese Informationen können dem Steuergerät als Signal über geeignete Datenleitungen bzw. Frequenzen zugesendet werden. So kann die Einzelschichtdicke in einzelnen Sektoren des Umfangs des Mehrschichtfolienschlauches gezielt beeinflusst werden. Eine Regelung der Dicke der Einzelschicht, mit dem Ziel sie gleichmäßig über den Umfang des Folienschlauches auf einen Sollwert zu halten, ist damit möglich.

Vor dem Hintergrund der oben dargestellten Zusammenhänge zwischen Temperatureintrag bzw. Kühlung und Dicke einer Einzelschicht sind folgende vorteilhafte Regelungsverfahren denkbar:
Beim Detektieren einer lokalen Dünnstelle kann für den entsprechenden Sektor die Schmelzetemperatur erhöht werden, so dass der Schmelzefluss erhöht und die Dünstelle beseitigt werden kann. Eine Kühlung der restlichen Bereiche erscheint möglich aber aus technischen Gründen schwieriger.

Eine lokale Dickstelle könnte durch Kühlen beseitigt werden. Auch hier erscheint es jedoch aus technischen und physikalischen Gründen vorteilhafter, die Thermoelemente aller Sektoren zunächst mit einer Offsettemperatur zu betreiben und in dem oder den Sektoren, in denen Dickstellen auftreten, die Temperatur herabzusetzen. Der Offset sollte vorteilhafterweise so gewählt sein, dass im Falle von Dünnstellen noch zusätzliches Potential zur lokalen Temperatursteigerung und damit zur Beseitigung auch einer Dünstelle besteht. Wie bei allen in der vorliegenden Druckschrift dargestellten Verfahrensschritten ist es auch bei der Regelung der Foliendicke vorteilhaft, wenn das Verfahren von einer Steuervorrichtung - computerimplementiert - durchgeführt wird. In diesem Fall ist die Steuervorrichtung vorzugsweise durch Programmbefehle so eingerichtet, dass sie die betreffenden Verfahrensschritte durch Ansteuerung der entsprechenden Funktionskomponenten des Blaskopfes und/oder der Extrusionsanlage abarbeiten kann.
Es ist vorteilhaft, die Dicke der Blasfolieneinzelschichten unmittelbar nach ihrer Extrusion zu messen. Falls die Blasfolie flachgelegt und aufgewickelt werden soll, könnte dies vor der Aufwicklung geschehen. Hierzu kann wieder eine oder mehrere Sonden verwendet werden, die die Umfangsfläche der Folienblase umkreist. Hierbei ist es vorteilhaft, zumindest zwei unterschiedliche Messprinzipien zu verwenden. So könnte die Gesamtdicke der Folie kapazitiv gemessen werden, während die Dicke einer bestimmten Einzelschicht durch die Absorption von Strahlung (z. B. elektromagnetische Strahlung oder Betastrahlung) gemessen wird.

Die Erfindung wird nachfolgend mit Bezug auf die Zeichnungen näher erläutert. Die einzelnen Figuren zeigen:
- Fig. 1: Einen Schnitt durch einen Stack-Die-Blaskopf
- Fig. 2a: Einen Schnitt durch einen Radialverteilungseinschub eines Blaskopfes
- Fig. 2b: Den selben Ausschnitt wie Figur 2a in größerem Maßstab
- Fig. 3: Einen Schnitt durch einen Blaskopf mit zentralem Vorverteiler
- Fig. 4: Einen Schnitt durch einen weiteren Blaskopf mit zentralem Vorverteiler
- Fig. 5a bis c: Ausschnitte von Schnitten durch weitere Blasköpfe
- Fig. 6a: Eine Skizze eines Einzelschichtblaskopfes
- Fig. 6b: Eine Skizze eines Einzelschichtblaskopfes
- Fig. 7a: ein Thermoelement in schematischer perspektivischer Ansicht und
- Fig. 7b: ein Thermoelement im Schnitt
- Fig. 8: Einen Schnitt VIII-VIII durch die Blasfolie gemäß Figur 1

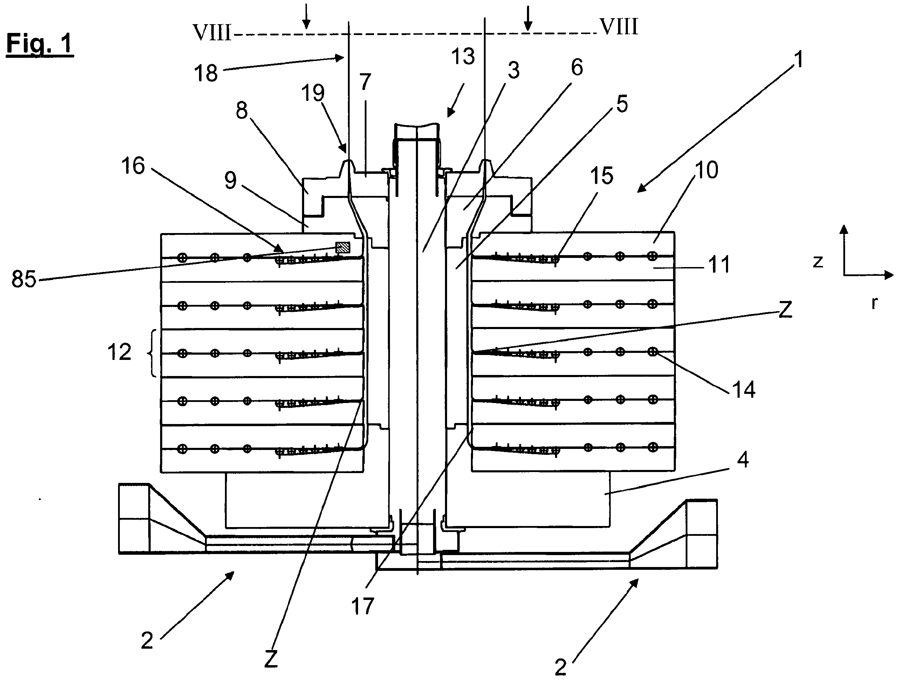

Fig. 1 zeigt einen Schnitt durch einen Stack-Die-Blaskopf 1. Die Schnittebene wird durch die Axial- und Radialkoordinaten z, r des Blaskopfes aufgespannt. Die Axialkomponenten z geben zugleich die Förderrichtung der Schmelze im Spalt zur Förderung mehrerer Einzelschichten an. Der Stack-Die-Blaskopf 1 ist auf einem Fuß 2, der zugleich einen Teil der für den Blaskopf benötigten Infrastruktur (Kühlungsluft, Strom-, Sensorik- und Steuerleitungen) enthält, abgestützt. Der Teil der Infrastruktur, der für das Innere der Folienblase bestimmt ist, geht in das Innenrohr 3 über, das beispielsweise die Luft zur Innenkühlung an die Innenkühlung 13 weitergibt. Das innenrohr 3 verläuft seinerseits innerhalb des unteren 4, mittleren 5 und oberen 6 Innendorns des Blaskopfes 1. Die Innendorne 4,5,6 begrenzen auch den Düsenspalt zur Leitung mehrerer Einzelströmungen nach innen und bilden in der radialen Richtung r des Blaskopfes 1 das Blaskopfinnere.

Die Schmelze wird dem gezeigten Stack-Die-Blaskopf in der radialen Richtung r von außen zugeführt, wobei die außerhalb des Blaskopfes 1 verlaufenden Leitungen nicht dargestellt sind.
Die Weiterleitung der Schmelze in dem Blaskopf übernehmen die Schmelzezuführleitungen oder Radialverteilungsleitungen 14, die in der vorliegenden Schnittzeichnung (Figur 1) lediglich im Querschnitt zu sehen sind. Nicht gezeigt ist, dass der Verlauf dieser Leitungen 14 eben auch Radialkomponenten r aufweist, so dass die Leitungen 14 die Schmelze den Wendeln 15 und damit den zweiten Spalten 16 zur Leitung einer Einzelströmung zuführen.

Die Leitungen 14, die Wendel 15 und die zweiten Spalten 16 werden in dem gezeigten Ausführungsbeispiel eines Stack-Die-Blaskopfes jeweils von der oberen und unteren Platte 10, 11 eines Radialverteilungseinschubs 12 begrenzt. Der gezeigte Blaskopf 1 weist fünf solcher Radialverteilungseinschübe 12 und damit auch fünf solcher Spalten 16 zur Leitung mehrerer Einzelströmungen auf. All diese Spalten münden in den Spalt zur Leitung mehrerer Einzelströmungen (Ringspalt 17), in dem die verschiedenen Schmelzeströmungen zu einem Verbund vereinigt werden. Im gezeigten Ausführungsbeispiel bewegt sich die Schmelze in diesem Spalt in z-Richtung, ändert also die Fließrichtung gegenüber den Einzelspalten 16 um 90°. Am axialen Ende des Blaskopfes durchtritt der Schmelzeverbund die von der inneren und äußeren Extrusionslippe gebildete Düse 19 und erkaltet zur Folie 18.

Die Einmündungspunkte der Spalten 16 zur Leitung von Einzelströmungen in den gemeinsamen Ringspalt 17 werden hier mit Z bezeichnet. In der Laufrichtung der Schmelze in den Einzelspalten (hier laufen sie in Figur 1 in r-Richtung auf das Zentrum des Blaskopfes zu) vor einem dieser Einmündungspunkte Z ist ein Thermoelement 85 positioniert. Es zeigt eine günstige Position für ein solches Element.

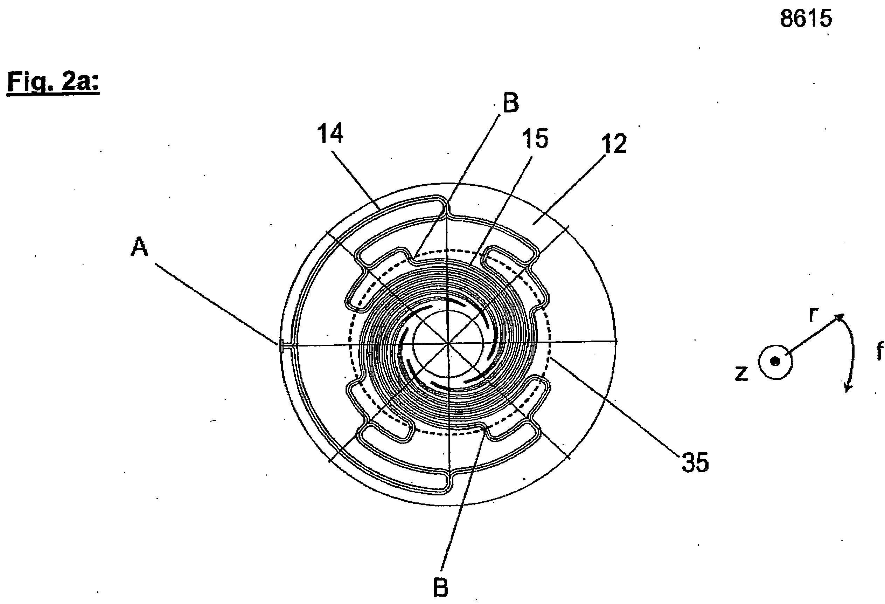

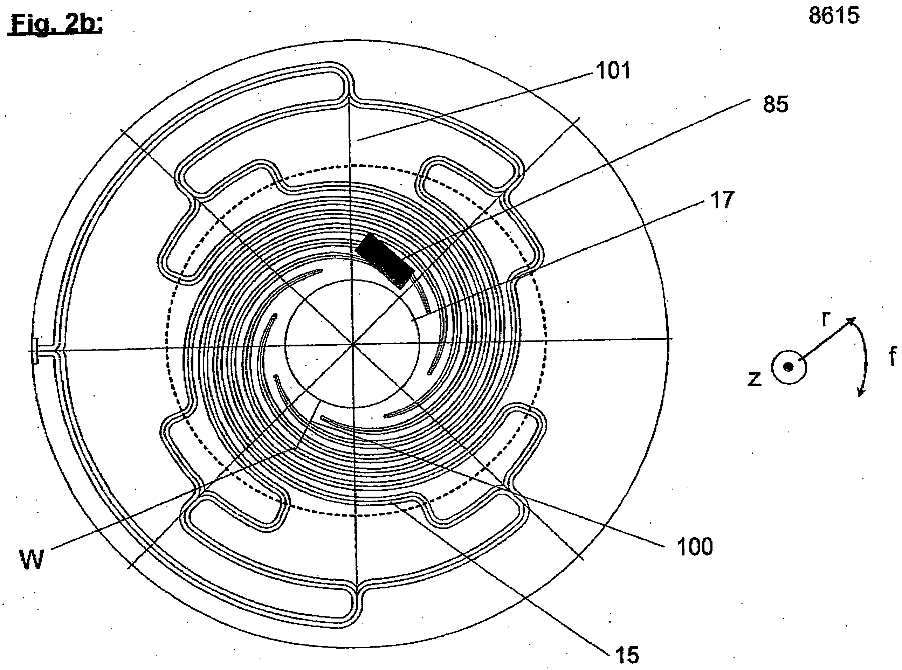

Figur 2a zeigt einen oft als Hirschgeweih bezeichneten Verlauf von Schmelzeleitungen 14 in einem Radialverteilungseinschub 12. Hierbei ist Figur 2 als Schnitt durch einen solchen Radialverteilungsseinschub 12 zu verstehen. Die Schnittebene wird durch die Radial- r und Winkelkoordinaten ϕ des Blaskopfes aufgespannt. Die spezifische Art des Verlaufes und der Verzweigungen der Radialverteilungsleitung 14 ähnelt einem Hirschgeweih. Zunächst wird die Schmelze am Übergabepunkt A von einer nicht dargestellten, außerhalb des Blaskopfes vorzugsweise zwischen einem Extruder und dem Blaskopf 1 verlaufenden Leitung an die innerhalb des Radialverteilungseinschubs 12 und damit innerhalb des Blaskopfes 1 verlaufende Radialverteilungsleitung (Schmelzezuführleitungen) 14 übergeben. Diese Radialverteilungsleitung verzweigt sich, um die Schmelze möglichst gleichmäßig an verschiedenen Stellen an den zweiten Spalt 16 zur Leitung einer Einzelströmung heranzuführen. Bei Erreichen dieses Spalts 16 an Punkt B geht die Schmelzeleitung 14 im vorliegenden Ausführungsbeispiel in die Wendel 15 über.
Figur 2b zeigt noch einmal denselben Ausschnitt wie Figur 2a, wobei die Position eines Thermoelements 85 angedeutet ist. Die Strecke 100 bezeichnet den kürzesten Weg zwischen dem Punkt W und dem gemeinsamen Ringspalt 17. Eine Schmelzemenge, die die Wendel 15 durch Überströmen an dem Punkt W verlässt und durch den Einzelspalt 16 dem Ringspalt 17 zustrebt, bewegt sich jedoch nicht entlang der Strecke 100. Vielmehr hat ihre Bewegung noch immer Winkelkomponenten ϕ, die sie erst allmählich durch Reibung verliert. Das Thermoelement 85 Ist daher "schräg" angeordnet. Der Winkel zwischen der Längsachse des Thermoelements 85 und der Wendel 15 ist kleiner als der Winkel zwischen dieser Strecke 100 und der Wendel 15. Er liegt demnach zwischen 0° und dem vorgenannten Winkel zwischen Wendel 15 und Strecke 100.
Aus darstellerischen Gründen wurde auf die Darstellung einer Mehrzahl von Thermoelementen 85 entlang des Umfanges des Ringspaltes 17 verzichtet.

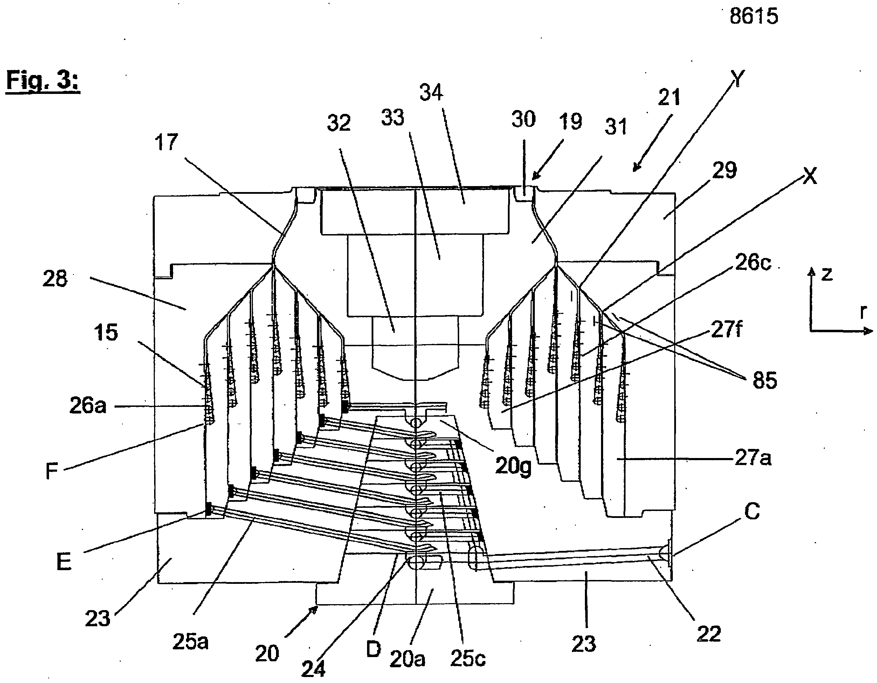

Figur 3 zeigt einen Blaskopf 21 mit einem zentralen Vorverteiler 20. Dieser befindet sich - in charakteristischer Weise - am Fuß des Blaskopfes und ist in radialer Richtung r zentral angeordnet.

Dem zentralen Vorverteiler 20 wird die Schmelze über Hauptschmelzeleitungen 24 a bis f zugeleitet. Aus darstellerischen Gründen ist stellvertretend nur eine Schmelzazuleitung 24 gezeigt. Der Vorverteiler besteht hier aus verschiedenen schichtartig übereinander angeordneten Bauteilen 20a bis 20g.

Jeder späteren Schmelzeschicht ist auch eine zentrale Kavität 24 a bis f zugeordnet, in die die Jeweilige Hauptschmelzeleitung 22 a bis f einmündet. Von diesen Kavitäten 24 a bis g werden die Schmelzeverteilungsleitungen 25 a-g abgezweigt. Zu beachten ist, dass von jeder Kavität mehrere Schmelzeverteilungsleitungen abzweigen, von denen lediglich eine gezeigt ist. Auch diese Maßnahme hat zum Ziel, die ersten Spalten 26a bis 26g zur Leitung einer Einzelströmung entlang ihrer Ausdehnung in Richtung der Winkelkoordinaten ϕ möglichst gleichmäßig mit Schmelze zu versorgen.

Bei Erreichen dieser Spalten 26a bis 26f gehen die Schmelzeverteilungsleitungen 25 a-f in Wendeln 15 über.

Nachdem die Einzelströmungen der Schmelze in den Spalten 26a bis 26g in ihre in der Abwicklung flache Form gebracht wurden, erreichen sie den Düsenspalt zur Leitung mehrerer Einzelströmungen und werden schließlich durch die Düse 19 extrudiert.

Zum mechanischen Aufbau dieses Blaskopfes 21 ist noch folgendes zu sagen: Der zentrale Vorverteiler 20 ist vom Hauptumlenkstück 23 umfangen.

Die Spalten 26a bis 26f zur Leitung einer Einzelströmung werden von dem Hauptumlenkstück 23, den Umlenkstücken 27 a-f und dem Mantel 28 gebildet. Vor seinem Einmünden in die Atmosphäre wird der Düsenspalt 17 vom innendom 31, dem Innenring 30 und dem Außenring 29 begrenzt. Der Innendom 31 weist weitere Innenteile 32 bis 34 auf.

Generell befinden sich günstige Stellen zur Positionierung von Thermoelementen unmittelbar vor den Einmündungspunkten der Spalten 26 a f zur Leitung von Einzelströmungen in den gemeinsamen Spalt 17. Im Falle des ersten Spaltes 26 a, der in den gemeinsamen Spalt 17 übergeht, wird die Einmündung am Punkt X angenommen.
Stellvertretend für die anderen Spalten ist für den Spalt 26 c der Punkt Y der Einmündung gezeigt. Die Thermoelemente 85 sind an günstigen Punkten unmittelbar vor den Einmündungen angebracht. Sie symbolisieren lediglich günstige Einbauorte. Es ist möglich, alle Spalten zur Leitung einer Einzelströmung mit diesen Thermoelementen zu versehen. Die Thermoelemente werden dann vorteilhafterweise in großer Zahl über den Umfang des Blaskopfes verteilt.

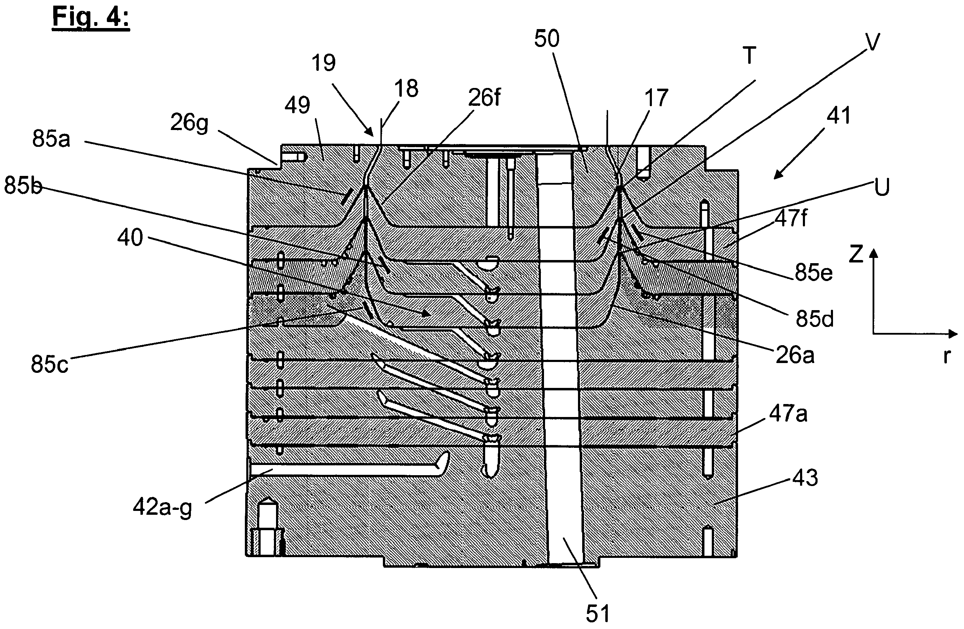

Der mechanische Aufbau des Blaskopfes 41 in Figur 4 wirkt zunächst übersichtlicher als der mechanische Aufbau des Blaskopfes 21:
Über dem Hauptumlenkstück 43 sind die weiteren Umlenkstücke 47 a-f angeordnet. Auf diese Umlenkstücke folgen der Außenring 49 und der Innenring 50. Das Innenrohr 51 bietet Platz für die Zuleitungen für das Innere der Folienblase 18.
Die Spalten 46 a bis f zur Leitung einer Einzelströmung werden wieder von den Umlenkstücken 43 sowie 47 a-f und den Ringen 49,50 begrenzt. Im Vergleich zum Blaskopf 21 fällt auf, dass die Spalten 47 b bis f zur Leitung einer Einzelströmung zu beiden Seiten der durch den Düsenspalt zur Leitung mehrerer Einzelströmungen fließenden Schmelze einmünden. Lediglich der erste Einzelspalt 26 a in der Hauptströmungsrichtung z der Schmelze geht direkt und damit einzeln in den Düsenspalt 17 über.

Als Einmündungspunkt in den Ringspalt wird daher für den Einzelspalt 26a der Punkt U, an dem sich die Einzelspalte 26 a und b treffen, angenommen. Wie schon bei den vorangegangenen Beispielen ist es auch hier günstig, wenn das Thermoelement 85 c nahe vor diesem Punkt U in der Umgebung des Spaltes 26a angeordnet ist. In dem gezeigten Ausführungsbeispiel hat das Thermoelement eine bevorzugte thermische Einwirkungszone auf die Fließzone des Spalts 26a. Auch die anderen Thermoelemente 85 a,b,d,e sind unmittelbar vor den Einmündungspunkten U und V der jeweiligen Einzelspalten 26 b bis f angebracht.

Auf diese Weise gelingt es ebenfalls, sieben Schmelzeschichten zusammenzuführen, aber den Abstand zwischen den Einmündungen der Einzelspalten 26 a bis f in den Düsenspalt 17 und dem Austritt der Schmelze aus der Düse 19 wesentlich geringer zu halten als bei dem Blaskopf 21. Dieser Umstand schont das Folienmaterial.
Auch der in Figur 4 gezeigte Blaskopf 41 weist einen zentralen Vorverteiler 40 auf, wobei dieser nicht verschiedene, exklusiv ihm zugeordnete Bauteile umfasst, wie der Vorverteiler 20 des Blaskopfes 21 mit seinen Teilen 20 a-g. Vielmehr ist der lediglich mit einem Pfeil bezeichnete zentrale Vorverteiler 40 als Bestandteil des Hauptumlenkstückes 43 und der Umlenkstücke 47 a- f ausgeprägt.
Ein Vergleich der beiden Blasköpfe 21 und 41 beziehungsweise Vorverteiler 20 und 40 offenbart jedoch grundlegende funktionale Gemeinsamkeiten:

Die Hauptschmelzeleitungen 22 a-f beziehungsweise 42 a-f bringen die Schmelze zu Kavitäten 24 beziehungsweise 44 a-f, die in der radialen Richtung r des Blaskopfes am besten genau im Zentrum des Düsenringes positioniert sind. In den gezeigten Ausführungsbeispielen verlaufen die Hauptschmelzeleitungen vorwiegend in radialer Richtung r. Es erscheint jedoch auch möglich, die Kavitäten durch überwiegend in z-Richtung verlaufende Hauptschmelzeleitungen zu versorgen.

Diese Kavitäten versorgen Schmelzeverteilungsleitungen 25 bzw. 45 a-f, die in der Regel sternartig von den Kavitäten abzweigen und wieder in die ersten Spalten 26 zur Leitung einer Einzelströmung einmünden. Sinn der zentralen Positionierung der Kavitäten 24,44 beim zentralen Vorverteiler ist, dass die verschiedenen, sternförmig von einer Kavität abzweigenden Schmelzeverteilungsleitungen 25 bzw. 45, welche eine Schmelzeströmung führen und welche in einen Spalt 26 zur Leitung einer Einzelströmung einmünden, von der Kavität bis zum Spalt gleich lang sind. Auf diese Weise erfährt die Schmelze einer nten Schmelzeschicht in allen ihr zugeordneten Schmelzeverteilungsleitungen 25a-f bzw. 45a-f denselben Druckverlust. Auf diese Weise ist eine gewünschte Folienqualität zu sichern.
In der Regel liegen die Kavitäten 24 a-f bzw. 44 a-f in z-Richtung unterhalb des Beginns der Spalten 26 a-f.

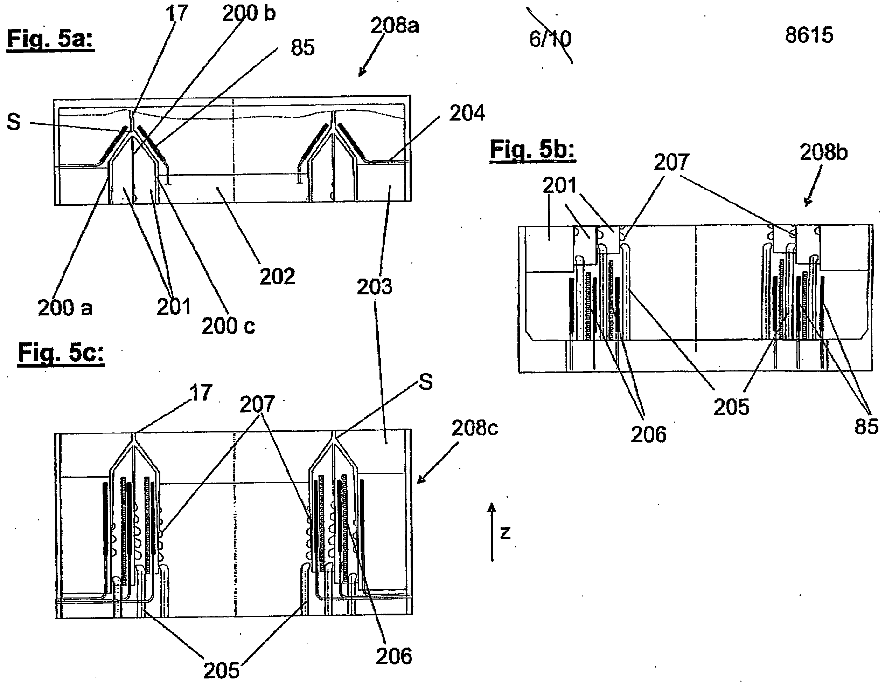

Die Figuren 5 a bis c illustrieren noch einmal bevorzugte Einbaulagen von Thermoelementen 85 in Blasköpfen 208 a bis c, deren sonstiger mechanischer Aufbau identisch ist und am ehesten dem in Figur 3 gezeigten Blaskopf 21 ähnelt. Bei diesen Blasköpfen wird der Weg der Schmelze von dem zentralen Umlenkstück 202, den Umlenkstücken 201 und dem Mantel 203 begrenzt. Die Schmelze fließt durch einen nicht gezeigten zentralen Vorverteiler in Schmelzezuführleitungen 205, die in Wendeln 207 übergehen. Diese geben die Schmelze durch Überströmen in die Einzelspalten 200 a,b,c ab. Am Punkt S vereinigen sich die Einzelspalten zum gemeinsamen Ringspalt 17. Die Schmelze strömt weiter und verlässt den Blaskopf 208 a bis c durch eine Düsenlippe, die bereits nicht mehr gezeigt ist.

Beim Blaskopf 208 a in Figur 5a sind die Thermoelemente 85 wieder in der Nähe des Einmündungspunktes S positioniert. Nur den äußeren Einzelspalten 200 a und c sind Thermoelemente zugeordnet. Eine solche Maßnahme ist vorteilhaft, wenn eine Beeinflussung der beiden äußeren Schichten durch einen Temperatureintrag auf die mittlere Schicht in dem Spalt 200 b vermieden werden soll. Die Art der Positionierung der Thermoelemente 85 minimiert die gegenseitige Beeinflussung. Darüber hinaus fällt auf, dass der Einwirkbereich der Thermoelemente offenbar auf den Fließbereich der Spalten 200 a und c begrenzt ist, da die Wendeln 207 in Fließrichtung der Folie (hier z) bereits früher enden. Die Leitungen 204 symbolisieren Leistungs- und/oder Signalzuleitungen.

In Figur 5b ist ein Ausschnitt eines prinzipiell ähnlich aufgebauten Blaskopfes 208 b, der die Schmelzezuleitungen 205 zu den Einzelspalten 200 a bis c zeigt, dargestellt. In diesem Ausführungsbeispiel sind die Thermoelemente 85 bereits in unmittelbarer Nachbarschaft zu diesen Schmelzezuführleitungen 205 angebracht. Damit liegen sie in Laufrichtung z der Schmelze weit vor den Thermoelementen 85 des Blaskopfes 208a. Zu erwähnen sind noch die Isolierelemente 206, die dafür sorgen, dass der Betrag der thermischen Einwirkung eines Thermoelements zumindest weitgehend auf einen Einzelspalt 200 b und c begrenzt bleibt. Der in radialer Richtung r äußerste Spalt 200 a wird von einem Thermoelement selektiv temperiert, das in den Mantel 203 des Blaskopfes 208 b eingebettet ist. Dieses Thermoelement bedarf keiner besonderen thermischen Trennung von einem anderen Einzelspalt. Gegenüber den Figuren 5a und b zeigt die Figur 5c einen mittleren Teil eines Blaskopfes 208c. Hier sind die Thermoelemente 85 derart positioniert, dass sie direkt auf die Schmelzeverteilzone der Einzelspalten 200 a bis c einwirken. Hier gehen die Wendeln 207 in die Einzelspalten 200 a bis c über. Wieder sind die beiden inneren Thermoelemente 85 thermisch durch die Isolierelemente 206 von je einem Einzelspalt 200 a, b getrennt. Bei den äußeren Thermoelementen, die in dem Mantel 203 angeordnet sind, erübrigt sich diese Maßnahme.

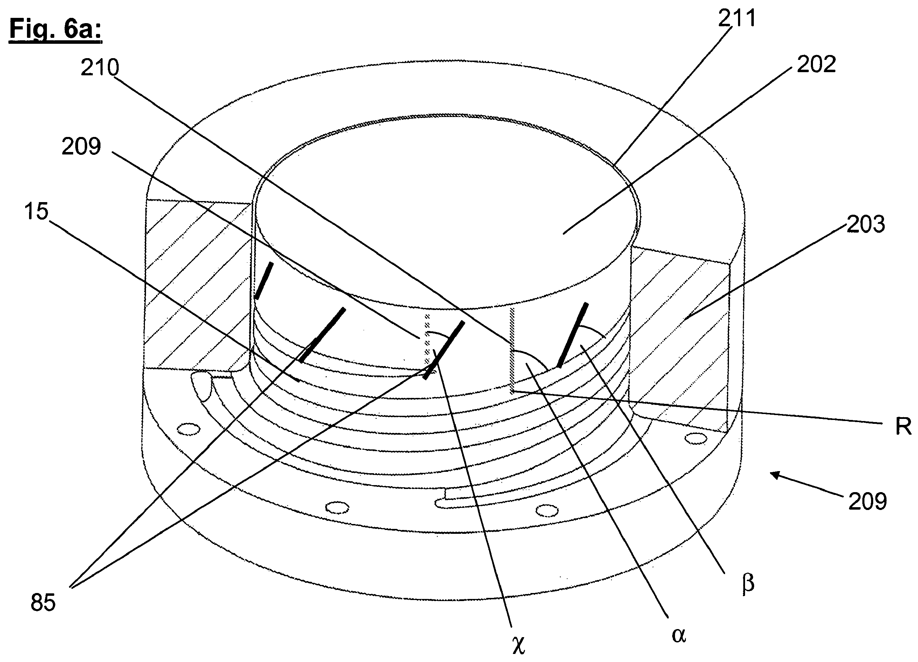

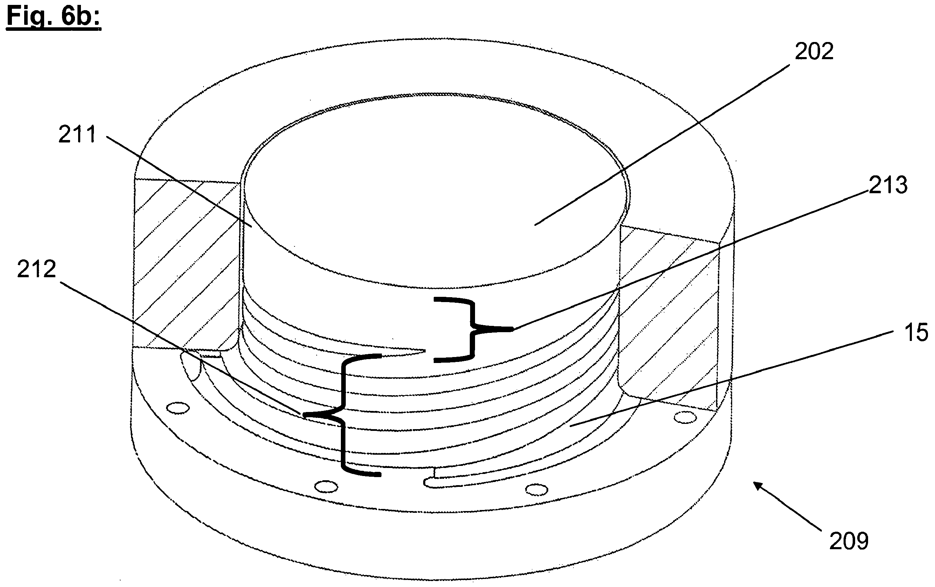

Die Figuren 6a und b zeigen einen Einzelschichtblaskopf 209. Mit diesen übersichtlichen Figuren sollen noch einmal bedeutende Begriffe der vorliegenden Druckschrift erläutert werden. Bei dem Blaskopf 209 wird von dem zentralen Umlenkstück 202 und dem Mantel 203 ein Einzelspalt 211 gebildet. Das zentrale Umlenkstück 202 dient zugleich als Fuß des Blaskopfes 209. Der kürzeste Weg zwischen dem Punkt R, an dem eine beliebige Menge Schmelze durch Überströmen die Wendel 15 verlässt, und dem Ende des Spalts ist die Strecke 210. Zwischen dieser Strecke und der Wendel ist ein Winkel α ausgebildet, der größer ist als der Winkel β zwischen der Längsachse des Thermoelements 85 und der Wendel 15. Durch diese gezeigte "schräge" Anordnung des Thermoelements wird gewährleistet, dass die Längsachse des Thermoelements weitgehend parallel zu der tatsächlich vorherrschenden Strömungsrichtung der Schmelze in dem Spalt 211 ausgerichtet ist. Natürlich ist diese Lehre auf die Verhältnisse in Spalten 16 zur Leitung einer Einzelströmung in erfindungsgemäße Blasköpfe 1, 21,208 a bis c übertragbar. Hier verläuft die Strecke zwischen einem Punkt der Wendel und der Einmündung in den gemeinsamen Ringspalt. Auch hier liegen die Winkel zwischen den Wendeln 15 und den Heizpatronen zwischen 0° und dem Winkel zwischen derselben Strecke (z. B. Strecke 100) und der Wendel 15.

Durch die Klammern 212 und 213 in Figur 6b wird noch einmal die Ausdehnung der Schmelzeverteil- und Fließzone verdeutlicht. Es ist vorteilhaft, wenn zumindest ein Thermoelement bevorzugt auf die Schmelzeverteil- und/oder Fließzone einwirkt.

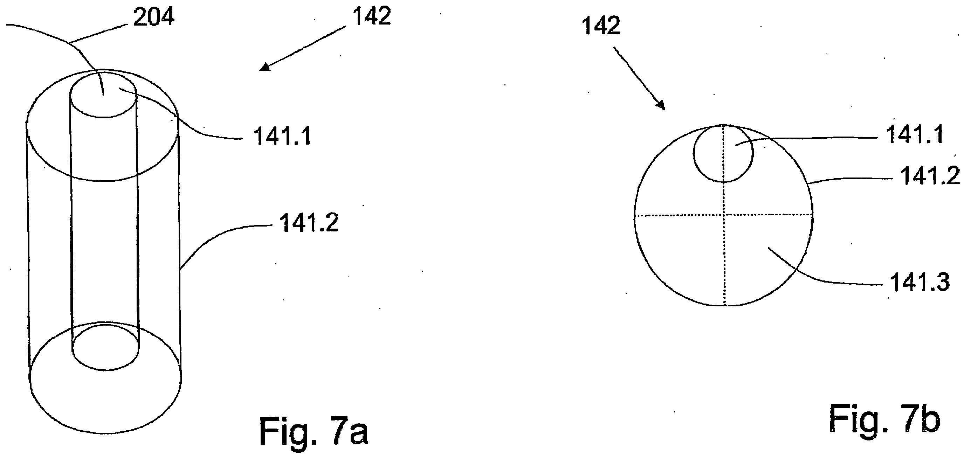

Fig. 7a zeigt ein Thermoelement 141 in perspektivischer Ansicht. Dabei ist ein thermisches Wirkelement 141.1, beispielsweise eine Heizpatrone, in ein Trägerelement 141.2 integriert.

Wie die Draufsicht der Fig. 7b zeigt, hat die Heizpatrone 141.1 im Vergleich zum Trägerelement 141.2 einen wesentlich kleineren Durchmesser und ist exzentrisch in diesem angeordnet, so dass eine Verstellung des Abstandes zu den Schmelze führenden Kanälen möglich ist.

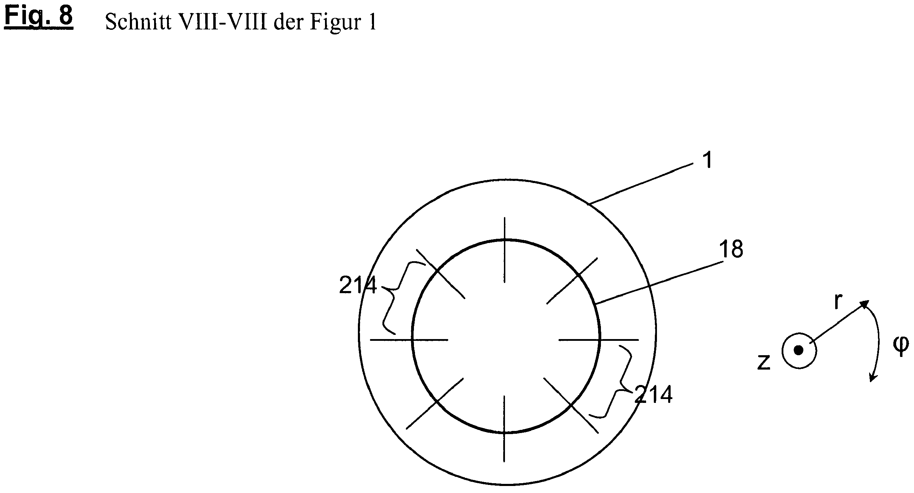

Die Figur 8 zeigt einen Schnitt VIII-VIII durch die Folienblase 18 gemäß Figur 1. Die Schnittebene wird durch die Radial- r und Winkelkoordinaten ϕ des Blaskopfes aufgespannt. Dabei ist der Fuß 2 und die Innenkühlung 13 des Blaskopfes 1 aus darstellerischen Gründen nicht gezeigt. Die Sektoren 214 stellen entlang des Folienumfanges dar. Durch Steuerung der Dicke der Einzelschicht können einzelne Dick- bzw. Dünnstellen einer einzelnen Polymerschicht der Multischicht-Folie, welche in solchen Sektoren auftreten beseitigt. Dazu werden wie oben bereits ausführlich beschrieben die Thermoelemente 85 selektiv (oder individuell) angesteuert, um die Viskosität des Schmelzestroms an bestimmten Stellen selektiv zu beeinflussen. Im Ausführungsbeispiel der Figur 8 sind 8 solcher Sektoren 214 eingezeichnet. In der Regel wird die Feinregelung von Dickstellen oder Dünnstellen entlang des Folienumfanges mehr als 8 Sektoren 214 notwendig machen. Es ist natürlich auch möglich, mehr als ein Thermoelement einem solchen Sektor zuzuordnen. Damit der thermische Einfluss des oder der Thermoelemente nicht nur selektiv auf die Dicke der Folie oder des Folienverbundes, sondern auch selektiv oder individuell auf die Dicke einer Einzelschicht wirkt, sollte das Thermoelement in Wirkverbindung mit einem Einzelschmelzestrom stehen, bevor dieser den gemeinsamen Ringspalt erreicht.

| **Bezugszeichenliste** | |
|---|---|
| 1 | Stack-Die-Blaskopf |
| 2 | Fuß- und Zuführteil |
| 3 | Innenrohr |
| 4 | unterer Innendorn |
| 5 | mittlerer Innendorn |
| 6 | oberer Innendorn |
| 7 | innere Düsenlippe |
| 8 | äußere Düsenlippe |
| 9 | Außendorn |
| 10 | obere Platte |
| 11 | untere Platte |
| 12 | Radialverteilungseinschub |
| 13 | Innenkühlung |
| 14 | Radialverteilungsleitungen |
| 15 | Wendel |
| 16 | zweiter Spalt zur Leitung einer Einzelströmung |
| 17 | Düsenspalt zur Leitung mehrerer Einzelströmungen |
| 18 | Folienblase |
| 19 | Düse |
| 20 a-f | zentraler Vorverteiler |
| 21 | Blaskopf mit zentralem Vorverteiler |
| 22 a-f | Hauptschmelzeleitungen |
| 23 | Hauptumlenkstück |
| 24 a-f | Kavität |
| 25 a-f | Schmelzeverteilungsleitungen |
| 26 a-f | erste Spalten |
| 27 a-f | Umlenkstücke |
| 28 | Mantel |
| 29 | Außenring |
| 30 | Innenring |
| 31 | Innendorn |
| 32 | Innenteil des Innendorns |
| 33 | Innenteil des Innendorns |
| 34 | Innenteil des Innendorns |
| 35 | gestrichelter Kreis, der die radiale Ausdehnung eines zweiten Spaltes zur Leitung einer Einzelströmung andeutet |
| 36 | |
| 37 | |
| 38 | |
| 39 | |
| 40 | zentraler Vorverteiler |
| 41 | Blaskopf mit zentralem Vorverteiler |
| 42 | Hauptschmelzeleitungen |
| 43 | Hauptumlenkstück |
| 44 | Kavität |
| 45 | Schmelzeverteilungsleitungen |
| 46 | erste Spalte |
| 47 | Umlenkstücke |
| 48 | Mantel |
| 49 | Außenring |
| 50 | Innenring |
| 51 | Innendorn |
| 52 | |
| 53 | |
| 55 | Schmelzeleitung |
| 61 | Blaskopf |
| 62 | Schmelzeverteilungsleitungen (Radialverteiler) |
| 63 | Platten |
| 64 | Schraube/Befestigungsmittel |
| 66 a,b | zweite Spalte zur Leitung einer Einzelströmung |
| 67 | Außenring |
| 68 | Innendorn |
| 69 | Nachrüstsatz |
| 85 | Thermoelement |
| 100 | kürzeste Strecke zwischen dem Punkt W und dem Ringspalt 17 |
| | |
| 141.1 | thermisches Wirkelement |
| 141.2 | Trägerelement |
| 142 | Thermoelement |
| | |
| A | Übergabepunkt zwischen äußerer (nicht gezeigter) und innerer Schmelzeleitung/Radialverteilungsleitung 14 |
| B | Übergabepunkt zwischen Schmelzeleitung/Radialverteilungsleitung 14 und Wendel 15 |
| R | Radialkoordinaten des Blaskopfes |
| Z | Axialkoordinaten des Blaskopfes |
| ϕ | Winkelkoordinaten des Blaskopfes |
| | |
| S, T, U, V, X, Y, Z | Einmündungspunkt einer Einzelströmung in einen Spalt (oft Ringspalt) zur Führung mehrerer Einzelströmungen |
| W, R | Punkt am Verlauf der Wendel 15, an dem eine Quantität Schmelze in den Einzelspalt 16 übergeht |
| 200 a,b,c | Einzelspalten |
| 201 | Umlenkstücke |
| 202 | zentrales Umlenkstück |
| 203 | Mantel |
| 204 | Leitung (Leistung und oder Signal, d.h. Ansteuerung) |
| 205 | Schmelzezuführleitung |
| 206 | Isolierelement |
| 207 | Wendel |
| 208 a,b,c | Blaskopf |
| 209 | Parallele zu 210 |
| 210 | kürzeste Strecke zwischen dem Punkt R und dem Ringspalt 17 |
| 211 | Einzelspalt |
| 212 | Klammer, die die Schmelzeverteilzone symbolisiert |
| 213 | Klammer, die die Fließzone symbolisiert |
| 214 | Sektor in dem Dickstellen bzw. Dünnstellen steuerbar sind |
| | |
| α | Winkel zwischen der Strecke 210 und der Wendel 15 |
| β | Winkel zwischen der Längsachse des Thermoelements und der Wendel 15 |
| χ | Winkel zwischen der Strecke 211 und der Längsachse des Thermoelements |
| | |

## Patentansprüche

1. Blaskopf (1,21,208) für die Herstellung einer mehrschichtigen Blasfolie (18) mit zumindest zwei Kunststoffschichten, welcher (1,21,208) zumindest folgende schmelzeführenden Bereiche (16,17,25,205) aufweist, welche in der Strömungsrichtung (z) der Schmelze von derselben nacheinander durchlaufen werden:
- Schmelzezuführleitungen (14, 25a,25c.205) zu zumindest zwei Elnzelspalten (16), wobei die Einzelspalten Einzelströmungen führen und die Einzelströmungen die Schmelzeströmungen sind, die jeweils eine Einzelschicht in der Blasfolie bilden,
- die zumindest zwei Einzelspalten (16),
- einen Ringspalt (17) in den die Einzelspalten einmünden,
- wobei an wenigstens einem Fließweg zumindest einer Einzelströmung vor dem Erreichen des Ringspaltes (17) zumindest ein Thermoelement (85,142), mit welchem auf die Temperatur der Umgebung Einfluss genommen werden kann, angeordnet ist
**dadurch gekennzeichnet,**
**dass** mit dem zumindest einen Thermoelement (85) die Dicke zumindest einer Einzelschicht der extrudierten Folie in zumindest einem Sektor (214), welcher (214) einen Teilbereich des Umfanges des Folienschlauches (18) bildet, steuerbar ist
und **dass** wenn mehrere Thermoelemente vorgesehen sind, zumindest zwei Thermoelemente unterschiedlichen Sektoren (214), welche (214) einen Teilbereich des Umfanges des Folienschlauches (18) bilden, zugeordnet sind und dass die zumindest zwei, den unterschiedlichen Sektoren zugeordneten Thermoelemente individuell ansteuerbar sind.

2. Blaskopf (1,21,208) nach dem vorstehenden Anspruch
**dadurch gekennzeichnet,**
**dass** die Thermoelemente (85,142) an oder in einem Bauteil (10,11,23,27,201, 203,204) angeordnet sind, das einen Einzelspalt (16) begrenzt und dabei zumindest teilweise in der Richtung des Schmelzestromes auf der Höhe des Einzelspaltes liegen.

3. Blaskopf (1,21,208) nach einem der vorstehenden Ansprüche
**gekennzeichnet durch**
zumindest einen Einzelspalt (16), der eine Schmelzeverteilzone (212),
in der die Schmelzeleitung (25) in den Einzelspalt übergeht und hierbei in Umfangsrichtung (ϕ) des Blaskopfes verläuft, aufweist.

4. Blaskopf (1,21,208) nach einem der vorstehenden Ansprüche
**gekennzeichnet durch**
zumindest einen Einzelspalt (16), der eine Fließzone (213) aufweist, in der Schmelze in abgeflachter Form geführt wird, wobei diese Fließzone (213) die Gestalt eines Rings aufweist.

5. Blaskopf (1,21,208) nach einem der vorstehenden Ansprüche
**gekennzeichnet durch**
zumindest ein Thermoelement (85,142), das in Fließrichtung der Schmelze zumindest teilweise auf der Höhe der Schmelzeverteilzone (212) und/oder der Fließzone (213) verläuft.

6. Blaskopf (1,21,208) nach einem der vorstehenden Ansprüche
**dadurch gekennzeichnet,**
**dass** die Thermoelemente (85,142) durch einen Wandbereich vom Fließweg der Schmelze getrennt angeordnet sind.

7. Blaskopf (1,21,208) nach einem der vorstehenden Ansprüche
**dadurch gekennzeichnet, dass**
die Thermoelemente (85,142) in einem Verteilwerkzeug (10,11,27,201,203,204) angeordnet sind.

8. Blaskopf (1,21,208) nach einem der vorstehenden Ansprüche
**dadurch gekennzeichnet, dass**
die Thermoelemente (85,142) näher an der ersten Mantelfläche eines Verteilwerkzeugs (10,11,27,201,203,204) angeordnet sind als an der zweiten und gegenüber der zweiten Mantelfläche durch eine Isolationsschicht (206) abgeschirmt sind.

9. Blaskopf (1,21,208) nach einem der vorstehenden Ansprüche
**dadurch gekennzeichnet, dass**
wenigstens ein Thermoelement (85,142) wenigstens ein Pelletier-Element umfasst.

10. Blaskopf (1,21,208) nach einem der vorstehenden Ansprüche
**dadurch gekennzeichnet, dass**
wenigstens ein Thermoelement (85,142) durch wenigstens einen Kanal gebildet ist, der mit einem Gas oder einer Flüssigkeit durchströmbar ist.

11. Blaskopf (1,21,208) nach dem vorstehenden Anspruch
**dadurch gekennzeichnet, dass**
der Kanal in einen Thermoelementgrundkörper (141.1) eingebracht ist, der in eine Ausnehmung des Verteilerwerkzeugs einsetzbar ist.

12. Blaskopf (1,21,208) nach einem der vorhergehenden Ansprüche
**dadurch gekennzeichnet, dass**
die Thermoelemente (85,142) einzeln oder in Gruppen selektiv ansteuerbar sind.

13. Verfahren zur Herstellung einer mehrschichtigen Blasfolie (18) mit zumindest zwei Kunststoffschichten, bei welchem zumindest folgende Verfahrensschritte vorgenommen werden:
- Zuführung von Schmelze (14, 25a, 25c, 205) zu zumindest zwei Einzelspalten (16), wobei die Einzelspalten Einzelströmungen führen und die Einzelsträmungen die Schmelzeströmungen sind, die jeweils eine Einzelschicht der Blasfolie bilden,
- Überführen der Schmelze in eine in der Abwicklung flache Form in den zumindest zwei Einzelspalten (16)
- Zusammenführung der Einzelströmungen in einem gemeinsamen Ringspalt (17),
- Beeinflussung der Temperatur zumindest eines Umfangsabschnitts zumindest einer Einzelströmung vor dem Erreichen des Ringspaltes (17) mit zumindest einem Thermoelement (85,142)
**dadurch gekennzeichnet.**
**dass** mit dem zumindest einen Thermoelement (85) die Dicke zumindest einer Einzelschicht der extrudierten Folie in zumindest einem Sektor (214), welcher (214) einen Teilbereich des Umfanges des Folienschlauches (18) bildet, gesteuert wird
und **dass** wenn mehrere Thermoelemente vorgesehen sind, zumindest zwei Thermoelemente unterschiedlichen Sektoren (214), welche (214) einen Teilbereich des Umfanges des Follenschlauches (18) bilden, zugeordnet sind und dass die zumindest zwei, den unterschiedlichen Sektoren zugeordneten Thermoelemente individuell angesteuert werden.

14. Verfahren nach dem vorstehenden Anspruch,
**dadurch gekennzeichnet, dass**
die Dicke von Einzelschichten der extrudierten Blasfolie (18) vor dem Aufwickeln der Blasfolie (18) gemessen wird und durch die Temperaturbeeinflussung mit dem zumindest einen Thermoelement geregelt wird.

15. Verfahren nach dem vorstehenden Anspruch,
**dadurch gekennzeichnet, dass**
die Dicke von Einzelschichten mit zumindest zwei Sensoren bestimmt wird, die sich zumindest zweier unterschiedlicher physikalischer Messprinzipien bedienen.

## Claims

1. Blow head (1, 21, 208) for the production of a multilayer blown film (18) with at least two layers of plastic, which (1, 21, 208) has at least the following melt-conducting areas (16, 17, 25, 205), which are successively passed through by the melt in the direction of flow (z) of the same:
- melt feed lines (14, 25a, 25c, 205) to at least two individual slits (16), the individual slits conducting individual streams and the individual streams being the melt flows that respectively form an individual layer in the blown film,
- the at least two individual slits (16),
- an annular slit (17), into which the individual slits open out,
- at least one thermocouple (85, 142), with which the temperature of the surroundings can be influenced, being arranged on at least one flow path of at least one individual stream before it reaches the annular slit (17),
**characterized**
**in that** the thickness of at least one individual layer of the extruded film in at least one sector (214) which (214) forms a partial area of the periphery of the film tube (18) can be controlled with the at least one thermocouple (85),
and **in that**, if a number of thermocouples are provided, at least two thermocouples are assigned to different sectors (214) which (214) form a partial area of the periphery of the film tube (18) and in that the at least two thermocouples assigned to different sectors can be individually activated.

2. Blow head (1, 21, 208) according to the preceding claim,
**characterized**
**in that** the thermocouples (85, 142) are arranged on or in a component (10, 11, 23, 27, 201, 203, 204) which bounds an individual slit (16) and thereby lie at least partially at the level of the individual slit in the direction of the melt stream.

3. Blow head (1, 21, 208) according to one of the preceding claims,
**characterized by**
at least one individual slit (16), which has a melt distribution zone (212), in which the melt line (25) goes over into the individual slit and thereby runs in the peripheral direction (ϕ) of the blow head.

4. Blow head (1, 21, 208) according to one of the preceding claims,
**characterized by**
at least one individual slit (16), which has a flow zone (213), in which melt is conducted in a flattened form, this flow zone (213) having the shape of a ring.

5. Blow head (1, 21, 208) according to one of the preceding claims,
**characterized by**
at least one thermocouple (85, 142), which runs in the flow direction of the melt at least partially at the level of the melt distribution zone (212) and/or the flow zone (213).

6. Below head (1, 21, 208) according to one of the preceding claims,
**characterized**
**in that** the thermocouples (85, 142) are arranged separated from the flow path of the melt by a wall area.

7. Blow head (1, 21, 208) according to one of the preceding claims,
**characterized in that**
the thermocouples (85, 142) are arranged in a distributing die (10, 11, 27, 201, 203, 204).

8. Blow head (1, 21, 208) according to one of the preceding claims,
**characterized in that**
the thermocouples (85, 142) are arranged closer to the first outer surface of a distributing die (10, 11, 27, 201, 203, 204) than to the second and are shielded relative to the second outer surface by an insulation layer (206).

9. Blow head (1, 21, 208) according to one of the preceding claims,
**characterized in that**
at least one thermocouple (85, 142) comprises at least one Pelletier element.

10. Blow head (1, 21, 208) according to one of the preceding claims,
**characterized in that**
at least one thermocouple (85, 142) is formed by at least one channel which can be flowed through by a gas or a liquid.

11. Blow head (1, 21, 208) according to the preceding claim,
**characterized in that**
the channel is introduced into a main thermocouple element (141.1) that can be inserted into a recess of the distributing die.

12. Blow head (1, 21, 208) according to one of the preceding claims,
**characterized in that**
the thermocouples (85, 142) can be selectively activated individually or in groups.

13. Method for the production of a multilayer blown film (18) with at least two layers of plastic, in which at least the following method steps are performed:
- feeding melt (14, 25a, 25c, 205) to at least two individual slits (16), the individual slits conducting individual streams and the individual streams being the melt flows that respectively form an individual layer of the blown film,
- transferring the melt into a form that is flat in a developed view in the at least two individual slits (16),
- merging the individual streams into a common annular slit (17),
- influencing the temperature of at least one peripheral section of at least one individual stream before it reaches the annular slit (17) with at least one thermocouple (85, 142),
**characterized**
**in that** the thickness of at least one individual layer of the extruded film in at least one sector (214) which (214) forms a partial area of the periphery of the film tube (18) is controlled with the at least one thermocouple (85)
and **in that**, if a number of thermocouples are provided, at least two thermocouples are assigned to different sectors (214) which (214) form a partial area of the periphery of the film tube (18) and in that the at least two thermocouples assigned to different sectors are individually activated.

14. Method according to the preceding claim,
**characterized in that**
the thickness of individual layers of the extruded blown film (18) is measured before the winding up of the blown film (18) and controlled by the temperature influence with the at least one thermocouple.

15. Method according to the preceding claim,
**characterized in that**
the thickness of individual layers is determined with at least two sensors that use at least two different physical principles of measurement.

## Revendications

1. Tête de soufflage (1, 21, 208) servant à fabriquer une feuille multicouche soufflée (18) présentant au moins deux couches de matière synthétique, la tête de soufflage (1, 21, 208) présentant au moins les parties suivantes (16, 17, 25, 205) qui amènent la matière fondue et qui sont traversées successivement par la matière fondue dans la direction d'écoulement (z),
des conduits (14, 25a, 25c, 205) d'amenée de matière fondue conduisant vers au moins deux interstices distincts (16), les interstices distincts conduisant des écoulements distincts et les écoulements distincts étant des écoulements de matière fondue qui forment chacun une couche distincte de la feuille soufflée,
les deux ou plusieurs interstices distincts (16), un interstice annulaire (17) dans lequel les interstices distincts débouchent,
au moins un thermo-élément (85, 142) par lequel une action peut être entreprise sur la température de l'environnement étant disposé sur au moins un parcours d'écoulement d'au moins un écoulement distinct avant l'atteinte de l'interstice annulaire (17),
**caractérisée en ce que**
à l'aide du ou des thermo-éléments (85), l'épaisseur d'au moins une couche distincte de la feuille extrudée peut être commandée en au moins un secteur (214), ce secteur (214) formant une partie de la périphérie du manchon (18) de feuille,
**en ce que** si plusieurs thermo-ëléments sont prévus, au moins deux thermo-éléments sont associés à des secteurs (214) différents, ces secteurs (214) formant une partie de la périphérie du manchon de feuille (18) et
**en ce que** les deux ou plusieurs thermo-éléments associés aux différents secteurs peuvent être commandés séparément.

2. Tête de soufflage (1, 21, 208) selon la revendication précédente, **caractérisée en ce que** les thermo-éléments (85, 142) sont disposés sur ou dans un composant (10, 11, 23, 27, 201, 203, 204) qui délimite un interstice distinct (16) et sont ainsi situés au moins en partie dans la direction de l'écoulement de matière fondue au niveau de l'interstice distinct.

3. Tête de soufflage (1, 21, 208) selon l'une des revendications précédentes, **caractérisée par** au moins un interstice distinct (16) qui présente une zone (212) de répartition de matière fondue dans laquelle le conduit (25) de matière fondue se prolonge en l'interstice distinct pour ainsi s'étendre dans la direction périphérique (ϕ) de la tête de soufflage.

4. Tête de soufflage (1, 21, 208) selon l'une des revendications précédentes, **caractérisée par** au moins un interstice distinct (16) qui présente une zone d'écoulement (213) dans laquelle de la matière fondue est t amenée sous forme aplatie, cette zone d'écoulement (213) présentant la forme d'un anneau.

5. Tête de soufflage (1, 21, 208) selon l'une des revendications précédentes, **caractérisée par** au moins un thermo-élément (85, 142) qui s'étend dans la direction d'écoulement de la matière fondue, au moins en partie au niveau de la zone (212) de répartition de matière fondue et/ou de la zone d'écoulement (213).

6. Tête de soufflage (1, 21, 208) selon l'une des revendications précédentes, **caractérisée en ce que** les thermo-éléments (85, 142) sont séparés par une paroi du parcours d'écoulement de la matière fondue.

7. Tête de soufflage (1, 21, 208) selon l'une des revendications précédentes, **caractérisée en ce que** les thermo-éléments (85, 142) sont disposés dans un outil de répartition (10, 11, 27, 201, 203, 204).

8. Tête de soufflage (1, 21, 208) selon l'une des revendications précédentes, **caractérisée en ce que** les thermo-éléments (85, 142) sont disposés plus près de la première surface d'enveloppe d'un outil de répartition (10, 11, 27, 201, 203, 204) que de la deuxième et sont protégés vis-à-vis de la deuxième surface d'enveloppe par une couche isolante (206).

9. Tête de soufflage (1, 21, 208) selon l'une des revendications précédentes, **caractérisée en ce qu'**au moins un thermo-élément (85, 142) comporte au moins un élément Pelletier.

10. Tête de soufflage (1, 21, 208) selon l'une des revendications précédentes, **caractérisée en ce qu'**au moins un thermo-élément (85, 142) est formé par au moins un canal qui peut être traversé par un gaz ou un liquide.

11. Tête de soufflage (1, 21, 208) selon la revendication précédente, **caractérisée en ce que** le canal est ménagé dans un corps de base (141.1) de thermo-élément qui peut être inséré dans une découpe de l'outil de répartition.

12. Tête de soufflage (1, 21, 208) selon l'une des revendications précédentes, **caractérisée en ce que** les thermo-éléments (85, 142) peuvent être commandés sélectivement, séparément ou en groupes.

13. Procédé de fabrication d'une feuille multicouche soufflée (18) présentant au moins deux couches de matière synthétique, dans lequel au moins les étapes suivantes sont réalisées :
amenée de matière fondue (14, 25a, 25c, 205) vers au moins deux interstices distincts (16), les interstices conduisant des écoulements distincts et les écoulements distincts étant les écoulements de matière fondue qui forment chacun une couche distincte de la feuille soufflée,
transfert de la matière fondue dans une forme aplatie vers les deux ou plusieurs interstices distincts (16),
rassemblement des écoulements distincts en un interstice annulaire commun (17),
action sur la température d'au moins une partie périphérique d'au moins un écoulement distinct, avant que l'interstice annulaire (17) soit atteint, et ce par au moins un thermo-élément (85, 142),
**caractérisé en ce que**
à l'aide du ou des thermo-éléments (85), l'épaisseur d'au moins une couche distincte de la feuille extrudée est commandée dans au moins un secteur (214), le secteur (214) formant une partie de la périphérie du manchon de feuille (18),
**en ce que** si plusieurs thermo-éléments sont prévus, au moins deux thermo-éléments sont associés à des secteurs (214) différentes, ces secteurs (214) formant une partie de la périphérie du manchon de feuille (18) et
**en ce que** les deux ou plusieurs thermo-éléments associés aux différents secteurs peuvent être commandés séparément.

14. Procédé selon la revendication précédente, **caractérisé en ce que** l'épaisseur de couche distincte de la feuille extrudée (18) est mesurée avant l'enroulement de la feuille soufflée (18) et est régulée par l'action sous la température exercée à l'aide du ou des thermo-éléments.

15. Procédé selon la revendication précédente, **caractérisé en ce que** l'épaisseur de couches distinctes est déterminée à l'aide d'au moins deux capteurs qui utilisent au moins deux principes physiques différents de mesure.
